# EUROPÄISCHE PATENTSCHRIFT

(11) **EP 1 635 698 B1**
(45) Veröffentlichungstag und Bekanntmachung des Hinweises auf die Patenterteilung: **28.08.2013**
(21) Anmeldenummer: 04739300.4
(22) Anmeldetag: 22.05.2004
(51) Int. Cl.: A61B 5/00, G01N 21/35, B07C 5/342, G01N 21/90

(54) **Verfahren zur quantitativen Analyse von Lösungen und Dispersionen mittels Nahinfrarot-Spektroskopie**
Method for the quantitative analysis of solutions and dispersions using near infrared spectroscopy
Procédé d'analyse quantitative de solutions et de dispersions au moyen d' une spectroscopie à infrarouge proche

(30) Priorität: 06.06.2003 DE 10326152
(43) Veröffentlichungstag der Anmeldung: 22.03.2006
(73) Patentinhaber: Sanofi-Aventis Deutschland GmbH, 65929 Frankfurt am Main (DE); Uhlmann Visio Tec GmbH, 88471 Laupheim (DE)
(72) Erfinder: PLOSS, Hans-Joachim, D-65926 Frankfurt am Main (DE); MERTENS, Richard, 88471 Laupheim (DE); PRINZ, Heino, 88471 Laupheim (DE); CHRISTIANSEN, Christian-Peter, 60529 Frankfurt (DE)
(86) Internationale Anmeldenummer: PCT/EP2004/005528
(87) Internationale Veröffentlichungsnummer: WO 2004/107969

(56) Entgegenhaltungen:
- EP-A- 0 887 638
- WO-A-01/16578
- DE-A1- 4 200 971
- US-A- 5 900 634
- US-A- 6 040 578
- US-A1- 2002 109 094
- BLANCO M ET AL: "Identification and quantitation assays for intact tablets of two related pharmaceutical preparations by reflectance near-infrared spectroscopy: Validation of the procedure" JOURNAL OF PHARMACEUTICAL AND BIOMEDICAL ANALYSIS, NEW YORK, NY, US, Bd. 22, Nr. 1, Februar 2000 (2000-02), Seiten 139-148, XP002212018 ISSN: 0731-7085
- MACDONALD B F ET AL: "SOME APPLICATIONS OF NEAR-INFRARED REFLECTANCE ANALYSIS IN THE PHARMACEUTICAL INDUSTRY" JOURNAL OF PHARMACEUTICAL AND BIOMEDICAL ANALYSIS, NEW YORK, NY, US, Bd. 11, Nr. 11/12, 1993, Seiten 1077-1085, XP001098341 ISSN: 0731-7085

## Beschreibung

Die Erfindung betrifft ein Verfahren zur quantitativen Analyse von Lösungen und Dispersionen, wie Lösungen und Dispersionen für pharmazeutische Zwecke, mittels Nahinfrarot-Spektroskopie.

Im Bereich der Herstellung von Arzneimitteln gibt es ständige Bestrebungen, die Qualitätskontrolle zur Erhöhung der Arzneimittelsicherheit zu verbessern. Die Herstellung erfolgt dabei nach dem internationalen Standard der Guten Herstellpraxis (Current Good Manufacturing Practice, cGMP), der durch die Arzneimittelüberwachungsbehörden vorgegeben wird (beispielsweise der USamerikanischen Food and Drug Administration, FDA). Bei schwerwiegenden Verstößen gegen diese Herstellpraxis kann einem Unternehmen die Erlaubnis zur Herstellung von Arzneimitteln entzogen werden.

Ein wichtiger Teil der Guten Herstellpraxis ist die physikalisch-chemische und mikrobiologische Testung und Freigabe des fertigen Produkts. Im Zuge dieser Testung werden mehrere, die Qualität des Produkts beschreibende Parameter geprüft und gegen Spezifikationen verglichen. Die Spezifikationen sind entweder in den Zulassungsunterlagen oder in den internationalen Arzneibüchern hinterlegt. Wenn alle Spezifikationen eingehalten sind, kann das Produkt vermarktet werden. Einer dieser Prüfparameter ist der Wirkstoffgehalt, der quantitativ bestimmt werden muss. Die quantitative Bestimmung erfolgt üblicher Weise stichprobenartig und in Form einer zerstörenden Prüfung. Als Analysemethoden werden bevorzugt flüssigchromatographische oder gaschromatographische Verfahren oder auch spektroskopische Verfahren eingesetzt, die einer Probenaufarbeitung bedürfen. Diese Verfahren zeichnen sich durch eine relativ hohe Präzision aus, die Analysegeschwindigkeit ist allerdings sehr gering. Daher sind diese Verfahren nicht geeignet, in line, also direkt während des Herstellprozesses, ein Ergebnis zu liefern. Die Messung kann weiterhin nicht an Produkten in einer Primärverpackung durchgeführt werden.

Der Nachteil der stichprobenartigen Chargenprüfung besteht darin, dass Trends oder außergewöhnliche Ereignisse innerhalb der Produktion, beispielsweise bei der Abfüllung von Suspensionen, nicht erfasst werden können. Es besteht die Gefahr, dass Ware als spezifikationsgerecht freigegeben wird, obwohl sie in Wirklichkeit nicht innerhalb der Freigabegrenzen liegt. Diese "out-of-specification" (OOS) -Produkte können beispielsweise durch kurzzeitige Produktionsprobleme oder durch Produktuntermischungen entstehen.

Die Anforderungen an eine vollständige, nicht nur stichprobenartige Überprüfung jeder produzierten Einheit auf der laufenden Produktionslinie können nur von zerstörungsfrei arbeitenden und hinreichend schnellen Analysemethoden erfüllt werden. Beide Anforderungen können von spektroskopischen Methoden prinzipiell erfüllt werden. Der überwiegende Teil der spektroskopischen Verfahren ist allerdings nicht geeignet, ohne vorherige Probenaufarbeitung, beispielsweise durch Auflösen, Aufkonzentrieren oder Verdünnen der Proben, quantitative Analyseergebnisse zu liefern. In der Regel sind diese Verfahren auch nicht geeignet, durch das Primärpackmittel (beispielsweise aus Glas oder Kunststoff) hindurch und/oder an dispersiven Systemen quantitativ auswertbare Spektren zu erzeugen. Nur der relativ schmale Wellenlängenbereich der Nahen Infrarotstrahlung (NIR), der sich von 800 bis 2500 nm erstreckt, kann zur Bearbeitung derartiger Aufgabenstellungen genutzt werden.

Verfahren, bei denen bandgeförderte Objekte , das heißt in Echtzeit und im Wesentlichen vollständig, kontrolliert werden, sind im Zusammenhang mit der Müllsortierung und der Sortierung von Kunststoffteilen bekannt. Diese Verfahren bedienen sich zum Teil der Nahinfrarot (NIR)-Spektroskopie.

EP-B 1 030 740 offenbart ein Verfahren zum Identifizieren und Sortieren von bandgeförderten Objekten, insbesondere zur Müllsortierung, bei dem die Materialbeschaffenheit der Objekte mittels eines NIR-Messgeräts spektroskopisch erfasst wird und die Sortierung in Abhängigkeit des Spektroskopie-Ergebnisses durch Entfernen von Objekten vom Förderband erfolgt.

EP-B 0 696 236 offenbart ein Verfahren zur Sortierung von Kunststoffteilen, bei welchem die Kunststoffteile an einem Stofferkennungssystem vorbeigeführt werden, das durch berührungslose Abtastung jedes Materialteils in einem Messfeld dessen Stoffsorte bestimmt. Das Stofferkennungssystem enthält einen berührungslos arbeitenden Stoffsensor, beispielsweise einen Mikrowellensensor, einen Röntgenstrahlensensor oder einen im nahen Infrarotbereich arbeitenden Spektroskopiesensor.

Bei der Abfüllung der Suspensionen für pharmazeutische Zwecke kann es aufgrund von Entmischungsprozessen zu Schwankungen während der Abfüllung kommen. Diese Schwankungen können dazu führen, dass ein Teil der abgefüllten Einheiten (zum Beispiel Kartuschen) Gehaltswerte für die aktive Substanz (zum Beispiel Insulin) beziehungsweise für Hilfsstoffe (zum Beispiel Protaminsulfat) aufweist, die außerhalb der geforderten Spezifikation (zum Beispiel 95,0 bis 105,0 % des deklarierten Wertes für Insulin) liegen.

Die europäische Patentanmeldung EP-A 0 887 638 beschreibt ein Verfahren und eine Vorrichtung zur Analyse der Zusammensetzung einer sich bewegenden Probe, wobei eine Nahinfrarot (NIR) -Strahlungsquelle eingesetzt wird und das von der Probe reflektierte NIR-Licht detektiert wird. Als Proben werden Tabletten oder Kapseln auf einem Förderband analysiert..

Zur quantitativen Analyse von flüssigen Proben ist prinzipiell die Hochdruckflüssigkeitschromatographie (HPLC, high pressure (performance) liquid chromatography) geeignet. Eine Qualitätskontrolle durch quantitative Analyse von Proben mittels HPLC weist aber den Nachteil auf, dass sie langsam ist und nicht zerstörungsfrei erfolgt. Sie eignet sich damit nur für eine stichprobenartige Qualitätskontrolle. Für eine -Kontrolle, bei dem jede der abgefüllten Produkteinheiten darauf überprüft werden soll, ob ihr Wirkstoffgehalt innerhalb der geforderten Spezifikationen liegt, ist diese Methode denkbar ungeeignet.

Von Herkert (2001, Dissertation, Eberhard-Karls-Universität Tübingen) wird eine NIR-Methode zur -Kontrolle von Pharmazeutika auf einer Verpackungsstraße evaluiert. Ziel der Arbeit war insbesondere die Evaluierung des Spektrometers VisioNIR^{®} (Uhlmann Visio Tec GmbH, Laupheim). Die Evaluierung wurde unter anderem anhand von Insulinsuspensionen vorgenommen.

In der Arbeit von Herkert wird die Remission, d.h. die diffuse Reflexion des eingestrahlten NIR-Lichts detektiert. Dabei wurde nur eine qualitative Unterscheidung von drei verschiedenen Insulintypen, die sich in ihrer Zusammensetzung aus löslichem und kristallinem Insulin unterschieden, durchgeführt. Anhand der spektralen Unterscheide in den Rohspektren oder Derivativspektren wurde abgeschätzt, ob eine Identifizierung der einzelnen Produkte anhand von NIR-Spektren möglich ist. Mit Hilfe der Hauptkomponentenanalyse (PCA) oder der VisioNIR^{®}-Auswertestatistik konnte aufgrund dieser Unterschiede eine Mustererkennung durchgeführt werden. Eine quantitative Analyse wurde nicht durchgeführt. Das Messen von Flüssigkeiten (Insulinsuspensionen) war mit dem VisioNIR^{®}-Spektrometer bei der Instrumentierung über der Verpackungsstraße nicht möglich. Streueffekte am Glas und im Luftraum über der Suspension verhinderten eine valide Spektrenaufnahme (siehe die vorstehend zitierte Dissertation von Herkert, Seite 76, 2. Absatz).

Aufgabe der Erfindung ist es, ein Verfahren zur Analyse von Produkten bereitzustellen, die eine Lösung oder Dispersion, beispielsweise für pharmazeutische Zwecke, enthalten, mit dem eine schnelle quantitative Bestimmung von in der Lösung oder Dispersion enthaltenen Substanzen möglich ist und das nicht invasiv ist und zerstörungsfrei arbeitet. Insbesondere soll das Verfahren zur Analyse einer großen Zahl von Produkteinheiten pro Zeiteinheit geeignet sein, um beispielsweise zur - Kontrolle der Zusammensetzung der Lösungen oder Dispersionen bei deren Abfüllung in einer Abfüllanlage oder einer Verpackungsstraße während des Produktionsprozesses eingesetzt zu werden. Unter -Kontrolle wird hierbei eine Kontrolle in Echtzeit verstanden, die im Wesentlichen alle Produkteinheiten erfasst.

Es wurde nun überraschender Weise gefunden, däss ein Verfahren zum Quantifizieren der Zusammensetzung eines sich bewegenden Produkts mit den folgenden Schritten angewendet werden kann:
Bestrahlen des Produkts mit einer Strahlungsquelle im nahen Infrarotbereich;
Empfangen von Strahlung, die durch das Produkt transmittiert wird, und Bereitstellen eines Ausgangssignals entsprechend der Intensität der empfangenen Strahlung bei einer Anzahl von unterschiedlichen Wellenlängen;
Bestimmen auf der Basis des Ausgangssignals mit einem mathematischen Verfahren, ob sich das Produkt innerhalb vorbestimmter Integritätskriterien befindet oder nicht.

Das erfindungsgemäße Verfahren ist dadurch gekennzeichnet, dass das sich bewegende Produkt, welches eine Lösung oder Dispersion in einer Primärverpackung ist und auf Basis des Ausgangssignals der Gehalt mindestens einer in der Dispersion oder Lösung enthaltenen Substanz quantitativ bestimmt wird, wobei das Produkt eine Dispersion enthält und die mindestens eine Substanz in der dispersen und in der Kontinuerlichen Phase der Dispersion vorliegt, und wobei die Dispersion Kristallines und gelöstes Insulin enthält.

Quantitativ im Sinne der vorliegenden Erfindung bedeutet, dass der Gehalt an mindestens einer zu bestimmenden Substanz in der Lösung oder Dispersion innerhalb eines Bereichs von im allgemeinen ± 3 %, vorzugsweise ± 5 %, besonders bevorzugt ± 10 %, insbesondere ± 20 % des Sollwertes (beispielsweise definiert durch die galenische Rezeptur) eindeutig und richtig bestimmt werden kann. Eindeutig heißt, das die mit dem erfindungsgemäßen Verfahren bestimmten Werte mit einer relativen Standardabweichung von nicht mehr als 1,5 %, vorzugsweise von nicht mehr als 1 %, besonders bevorzugt von nicht mehr als 0,5 % zuverlässig sind. Als richtig werden dabei Referenzwerte, die mittels eines validierten und anerkannten Referenzverfahrens bestimmt wurden, beispielsweise eines chromatographischen Verfahrens wie HPLC, angesehen, wobei der Referenzwert und der mit dem erfindungsgemäßen Verfahren bestimmte Wert um maximal 5 %, vorzugsweise um maximal 3 %, besonders bevorzugt um maximal 1 % voneinander abweichen.

Das Produkt kann Lösungen oder Dispersionen, üblicher Weise in einem für NIR-Strahlung transparenten Behältnis enthalten. Enthält das Produkt eine Dispersionen, so handelt es sich im Allgemeinen um eine flüssige Dispersion wie eine Emulsion oder Suspension. Die in der Dispersion enthaltene Substanz, deren Gehalt mit dem erfindungsgemäßen Verfahren quantitativ bestimmt wird, kann nur in der kontinuierlichen Phase oder nur in der dispersen Phase oder aber auch in beiden Phasen verteilt vorliegen. Bei den Dispersionen oder Lösungen kann es sich um pharmazeutische Produkte handeln, die einen Wirkstoff gelöst und/oder dispergiert enthalten. Bei der Substanz, deren Gehalt quantitativ bestimmt werden soll, kann es sich beispielsweise um einen pharmazeutischen Wirkstoff oder um einen Hilfsstoff handeln. Beispielsweise kann es sich bei der Lösung um eine Insulinlösung und bei der Dispersion um eine Insulinsuspension handeln, welche kristallines und gelöstes Insulin enthält, wie beispielsweise die Insuline.des NPH-Typs (neutrale protaminhaltige Insulinzubereitungen nach Hagedorn), Mischungen von NPH-insulinen und gelösten Insulinen oder Insulin-Zink-Suspensionen. Bei den Insulinen kann es stich beispielsweise um Humaninsulin oder dessen gentechnisch oder enzymtechnisch veränderte Analoga handeln.

Die Lösungen oder Dispersionen können in einer Primärverpackung vorliegen, beispielsweise in Kartuschen, Ampullen oder Flaschen, beispielsweise aus Glas oder Kunststoff. Diese können sich auf einem Förderband befinden und während des Fördervorganges, beispielsweise von einer Abfüllanlage zu einer Verpackungsmaschine, mit dem erfindungsgemäßen Verfahren untersucht werden.

Das erfindungsgemäße Verfahren wird in einer Transmissionsanordnung durchgeführt, das heißt die durch das Produkt transmittierte Strahlung wird empfangen.

Das Produkt, dessen Zusammensetzung verifiziert werden soll, wird mit einer Strahlungsquelle im nahen Infrarotbereich bestrahlt. Der Nahinfrarotbereich umfasst üblicher Weise den Wellenlängenbereich von 800 bis 2500 nm. Geeignete Strahlungsquellen sind beispielsweise Quecksilber-Halogenlampen.

Die von dem Produkt reflektiert oder transmittierte Strahlung wird von einer Strahlungsempfangsvorrichtung empfangen. Es wird ein Ausgangssignals entsprechend der Intensität der empfangenen Strahlung bei einer Anzahl von unterschiedlichen Wellenlängen bereitgestellt. Dies kann in der Weise geschehen, dass die empfangene Strahlung in einem Spektrometer in eine Anzahl von Wellenlängen aufgesplittet wird und von einem Photodiodenarray detektiert wird. Der Strom von jeder Photodiode kann über einen vorgewählten Zeitraum integriert und anschließend mittels eines Analog/Digital (A/D)-Konverters in ein digitales Signal umgewandelt werden.

Der Integrationszeitraum kann in Abhängigkeit der Position des sich bewegenden Produktes von einem Trigger, beispielsweise einer Lichtschranke, gestartet werden.

Auf Basis des bei den unterschiedlichen Wellenlängen bereitgestellten Ausgangssignals wird mit einem mathematischen Verfahren der Gehalt der mindestens einen in der Dispersion oder Lösung enthaltenen Substanz quantitativ bestimmt. Geeignete mathematische Verfahren sind Verfahren zur multivariaten Datenanalyse. Geeignete Verfahren sind beispielsweise das PLS (partial least square) -Verfahren oder die Hauptkomponentenanalyse (PCA). Derartige Verfahren sind dem Fachmann bekannt.

Die mathematischen Verfahren können Gewichtungsfaktoren verwenden, um den Einfluss von störenden, nicht auf die Zusammensetzung zurückzuführenden Variabilitäten in den aufgenommenen NIR-Spektren bei der Auswertung zu reduzieren und spektrale Merkmale hervorzuheben, die zwischen Proben des gleichen Produkttyps nicht variieren.

Üblicher Weise wird mindestens einmal eine Kalibrierung durchgeführt, indem der Gehalt der mindestens einen Substanz in der Lösung oder Dispersion mittels eines alternativen Verfahrens quantitativ bestimmt wird.

Ein bevorzugtes alternatives Verfahren, welches zur Kalibrierung eingesetzt wird, ist HPLC. Die Kalibrierung kann in regelmäßigen Abständen während der Durchführung des erfindungsgemäßen Verfahrens wiederholt werden.

In einer Ausführungsform des erfindungsgemäßen Verfahrens wird das in der EP-B 0 887 638 auf den Seiten 5, Zeile 47 bis Seite 8, Zeile 12 beschriebene mathematische Verfahren verwendet. Bei dem dort beschriebenen mathematischen Verfahren werden Gewichtungsfaktoren verwendet.

Dabei werden die Daten der Rohspektren, welche die Strahlungsintensitäten in Intervallen (von beispielsweise 3,8 nm) wiedergeben, korrigiert, wobei ein Standardwert erhalten wird, der unabhängig von der Charakteristik des Spektrometers und der Strahlungsempfangsvorrichtung ist. Die so kalibrierten Intensitäten werden geglättet, um Effekte durch Signalrauschen zu minimieren, wobei eine Gauss'sche Glättungsfunktion verwendet wird. Zur Minimierung der systembedingten Einflüsse können die Daten autoskaliert werden. Dazu werden die einzelnen Intensitäten des Spektrums über den gesamten Wellenlängenbereich auf eine Standardabweichung von null und eine Varianz von eins normiert. Durch Bildung der 1. Ableitung können die Unterschiede der einzelnen Spektren bezüglich Steigung und spektralen Merkmalen der einzelnen Produktproben hervorgehoben werden. Anstelle der 1. Ableitung kann auch die 2. oder 0. Ableitung verwendet werden.

Anschließend werden die Differenzen zwischen einem Modellspektrum und dem Spektrum der Produktprobe (Probenspektrum) bei jeder gemessenen Wellenlänge berechnet. Überschreiten diese Differenzen ein gesetztes Limit, so wird die Probe als signifikant verschieden von dem Modell erkannt.

Das Modell (master model) wird aus den Kalibrierdatensätzen einer Anzahl von gleichen Proben der unterschiedlichen Produkttypen erstellt. Dabei wird ein Mittelwertspektrum berechnet. Betrachtet man die Varianz des Modells pro Messpunkt (Wellenlänge), so findet man spektrale Bereiche mit signifikant hohen Standardabweichungen. Diese Bereiche spiegeln die Variabilität der (bezüglich ihrer Zusammensetzung gleichen) Kalibrierproben in Bezug auf verschiedene Einflussfaktoren, beispielsweise Unterschiede im Glas oder in der Position einer Kartusche, wieder. Um den Einfluss dieser störenden Varianzen zu minimieren, werden Gewichtungsfaktoren berechnet. Diese Gewichtungsfaktoren wichten spektrale Bereiche mit einer geringeren Standardabweichung höher als Bereiche mit hoher Standardabweichung. Der Gewichtungsfaktor wird aus der Standardabweichung des Abstands zwischen den Intensitätswerten und des Intensitätswertes des Modells bei jeder Wellenlänge ermittelt.

Anschließend wird unter Verwendung der Gewichtungsfaktoren die Euklidische Distanz eines jeden Datensatzes innerhalb des Kalibrierprobendatensatzes berechnet. Der Mittelwert dieses Wertes entspricht der Standardabweichung des Modells. Am Ende des Modellaufbaus wird noch die mittlere Euklidische Distanz des Models berechnet. Dieser Wert wird in Modellstandardabweichungen als Bezugsgröße angegeben.

Bei Durchführung des erfindungsgemäßen Verfahrens wird das für jede Produktprobe erhaltene Spektrum dem Modellspektrum gegenüber gestellt. Dazu wird die Euklidische Distanz zwischen der Intensität bei jeder Wellenlänge und der entsprechenden Intensität für das Modell berechnet, wobei der Gewichtungsfaktor bei jeder Wellenlänge angewendet wird. Die verwendeten Gewichtungsfaktoren wurden bei der Modellbildung ermittelt. Das Ergebnis wird zur Berechnung der Euklidischen Distanz der Probe verwendet. Diese wird in Modellstandardabweichungen des Modells als Bezugsgröße angegeben.

Der Wert der Euklidischen Distanz der Probe wird schließlich mit einem festgesetzten Grenzwert verglichen. Der Grenzwert errechnet sich aus der mittleren Euklidischen Distanz des Modells und einem Wahrscheinlichkeitsbereich.

Mit dem vorstehend beschriebenen mathematischen Verfahren kann die Zusammensetzung von Lösungen und von Dispersionen verifiziert werden. Wird die Zusammensetzung von Dispersionen verifiziert, so werden in einer besonders bevorzugten Ausführungsform des Verfahrens im Bestimmungsschritt diejenigen Gewichtungsfaktoren verwendet, die auf Basis einer Lösung ermittelt wurden. Dabei enthält die Lösung, auf deren Basis die Gewichtungsfaktoren ermittelt werden, vorzugsweise die gleiche zu bestimmende Substanz wie die Dispersion. In der Dispersion kann diese Substanz dispergiert und zusätzlich gelöst vorliegen, oder - allgemeiner - zwischen der kontinuierlichen und der dispersen Phase verteilt vorliegen.

Beispielsweise enthalten Insulinsuspensionen einen Anteil gelösten Insulins und einen Anteil suspendierten Insulins in kristalliner Form. Dieser Anteil kristallinen Insulins kann, bei konstantem Insulingehalt, in weiten Bereichen variieren. In diesem Fall kann es sich als vorteilhaft erwiesen, im Bestimmungsschritt die Gewichtungsfaktoren zu verwenden, die auf Basis einer reinen Insulinlösung ermittelt wurden. Bei Verwendung der Gewichtungsfaktoren der reinen Lösung wird der Einfluss von Streueffekten eliminiert, welche durch die suspendierten Kristalle hervorgerufen werden.

Mit den beschriebenen mathematischen Auswerteverfahren kann eine Analyse der Produkte in hoher Geschwindigkeit erfolgen, beispielsweise innerhalb eines Zeitfensters von nur 5 ms. Dies erlaubt die Analyse einer großen Zahl von Produkten innerhalb eines kurzen Zeitraums. Das Verfahren ist zudem nicht invasiv und kann berührungsfrei arbeiten. Dadurch ist es beispielsweise sehr gut zur Analyse von Produkten auf einer Verpackungsstraße oder in Verbindung mit einer Abfüllanlage für Kartuschen oder Flaschen geeignet. Diese Analyse kann in Echtzeit erfolgen und 100% der auf der Verpackungsstrasse transportierten Produkte erfassen. Mit dem erfindungsgemäßen Verfahren können mindestens 3, vorzugsweise mindestens 8 oder sogar 50 oder mehr Produkte pro Sekunde nacheinander analysiert werden. Damit ist es beispielsweise zur -Kontrolle von Produkteinheiten bei der Herstellung, Abfüllung und/oder Verpackung von Lösungen und Dispersionen für pharmazeutische Zwecke geeignet.

Mit dem erfindungsgemäßen Verfahren ist es beispielsweise möglich, bei der Abfüllung von Lösungen oder Dispersionen für zu pharmazeutischen Zwecke von einer stichprobenartigen Kontrolle zu einer 100%igen Kontrolle überzugehen.

Eine Apparatur zur Durchführung des Verfahrens umfasst
eine Strahlungsquelle, die Strahlung im nahen Infrarotbereich emittiert, zum Bestrahlen des Produkts;
eine Strahlungsempfangsvorrichtung, die die durch das Produkt reflektierte oder transmittierte Strahlung empfängt;
ein Spektrometer zum Empfangen der Strahlung von der
Strahlungsempfangsvorrichtung und zum Bereitstellen eines Ausgangssignals entsprechend der Intensität der empfangenen Strahlung bei einer Anzahl unterschiedlicher Wellenlängen;
eine Vorrichtung zur quantitativen Bestimmung auf Basis des Ausgangssignals des Gehalts mindestens einer in der Dispersion oder Lösung enthaltenen Substanz.

Die Strahlungsempfangsvorrichtung kann eine Sammellinse und einen Lichtleiter aufweisen. Das Spektrometer kann als Detektor ein Photodiodenarray aufweisen.

Die Apparatur weist vorzugsweise zusätzlich eine Kalibriervorrichtung auf, mit der der quantitative Gehalt der mindestens einen Substanz nach einem alternativen Verfahren bestimmt wird, beispielsweise einen Hochdruckflüssigkeitschromatographen.

Die Apparatur kann ferner zusätzlich eine Sortiervorrichtung aufweisen, mit der nicht spezifikationsgerechte Produkte, die mit dem erfindungsgemäßen Verfahren ermittelt werden, aussortiert werden. Nicht spezifikationsgerecht sind die Produkte, die nicht innerhalb der vorbestimmten Integritätskriterien liegen.

Wird die Apparatur (auch) zur quantitativen Analyse von Dispersionen verwendet, so umfasst sie vorzugsweise weiterhin eie Vorrichtung zum Homogenisieren der zu quantifizierenden Dispersionen vor Analyse der Dispersionen. Die Dispersionen können beispielsweise in den Behältern durch einen Schüttelmechanismus oder durch einen Rotationsmechanismus homogenisiert werden. Eine Homogenisierung kann aber auch bereits durch den Abfüllvorgang erreicht werden.

Die Apparatur kann ferner eine Vorrichtung zum Erkennen der Produktposition, beispielsweise ein Bildsystem oder eine Lichtschranke, aufweisen.

Die Apparatur kann in Verbindung mit einer Abfüllvorrichtung verwendet werden, in der die Lösungen oder Dispersionen in Primärverpackungen abgefüllt werden. Die Apparatur kann auch Bestandteil einer derartigen Abfüllvorrichtung sein.

In einer Ausführungsform weist die Vorrichtung einen Lichtleiter auf, der die von der Strahlungsquelle emittierte Strahlung an den Ort des Produktes leitet.

Die Erfindung wird nachfolgend unter Bezugnahme auf die Figuren näher erläutert.

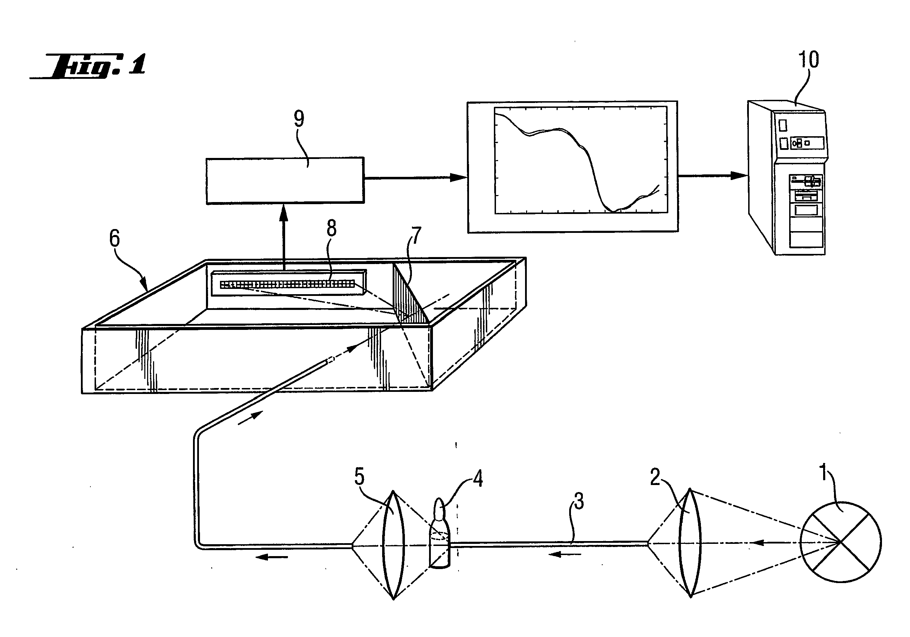

Figur 1 zeigt schematisch eine Vorrichtung zur Durchführung des Verfahrens. Die Vorrichtung umfasst eine Strahlungsquelle (1), beispielsweise eine Wolfram-Halogenlampe. Die von der Strahlungsquelle emittierte Nahinfrarot-Strahlung wird von einer Sammellinse (2) kollimiert und mittels eines Lichtleiters (3) an den Ort des Produktes (4) geleitet. Das Produkt kann beispielsweise eine Glaskartusche sein, die eine Insulinsuspension enthält und, beispielsweise von einer Abfüllvorrichtung kommend, auf einem Förderband an dem Ende des Lichtleiters (3) vorbeigeführt wird. Die von dem Produkt (4) transmittierte Strahlung wird von einer Sammellinse (5) kollimiert und mittels eines Lichtleiters dem Spektrometer (6) zugeleitet. In dem Spektrometer (6) wird die transmittierte Strahlung, welche die spektrale Information des durchstrahlten Produktes (4) enthält, mittels eines Gitters (7) in Strahlung unterschiedlicher Wellenlängen aufgesplittet und von einem Photodiodenarray (8) detektiert. Die von dem Photodiodenarray in Abhängigkeit von der Wellenlänge detektierten Intensitäten werden mittels eines A/D-Konverters (9) in digitale Signale umgewandelt und in der Bestimmungsvorrichtung (10), beispielsweise einem PC, ausgewertet.

### Beispiel 1

Ziel einer -Überwachung der Insulinabfüllung ist eine quantitative Kontrolle des Insulingehalts von 100% der abgefüllten Insulinampullen. Der Insulingehalt der abgefüllten Insulinsuspensionen soll dabei nur um maximal +/- 5% vom deklarierten Wert abweichen. Ausreißer sollen einwandfrei detektiert werden können.

Zur Simulation der Überwachung der Insulinabfüllung wurden mit einem Satz Kalibrierproben, die kristallines Insuman Basal^{®}-Insulin in einer Primärverpackung (Glaskartuschen) enthielten, Kalibrierungen erstellt und anschließend Produktionsproben untersucht. Zur Kalibrierung wurden Insulinkartuschen mit genau bekannten Insülingehalten von 90 bis 120% des Sollgehaltes eingesetzt. Die Referenzwerte wurden mit HPLC bestimmt. Vor den Messungen wurden die Kartuschen gründlich geschüttelt, so dass eine homogene Suspension vorlag.

Die Insulinspektren wurden mit einem Photodiodenarray-Spektrometer (MCS 511 NIR 1.7) in Transmission aufgenommen. Der Wellenlängenbereich der Messung betrug 960 bis 1760 nm, wobei der Wellenlängenbereich von 960 bis 1360 nm ausgewertete wurde. Als NIR-Strahlungsquelle wurde eine 20 W Halogenlampe eingesetzt. Das Spektrometer wurde regelmäßig gegen Referenzstandards abgeglichen. Als Referenz wurden ein BG5- und ein BG9-Filter verwendet.

Zur Spektrenvorbehandlung wurden diese geglättet und normiert. Es wurden die Spektren in 0. Ableitung verwendet. Dabei bleiben die Streueigenschaften der Insulinproben in den Spektren erhalten.

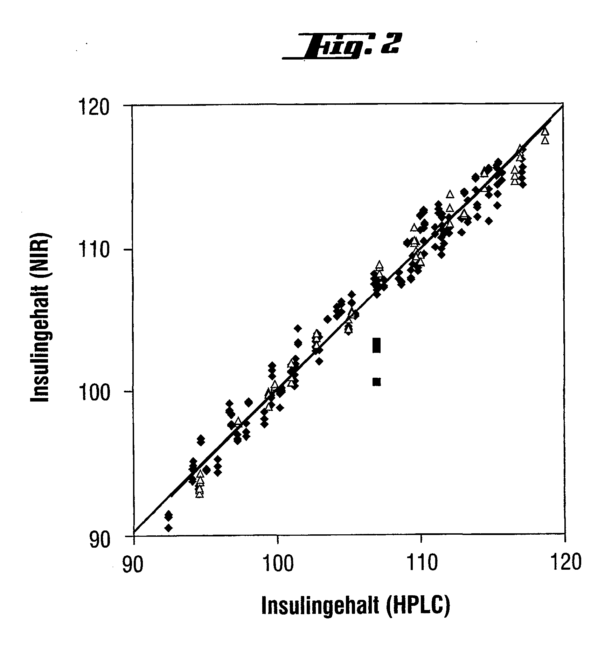

Anschließend wurden die Spektren mittels eines multivariaten Auswerteverfahren ausgewertet. Als Regressionsverfahren wurde eine PLS (partial least squares) - Regression verwendet, es können aber auch andere multivariate Auswerteverfahren verwendet werden. Durch die Regression wird ein mathematischer Zusammenhang zwischen der spektralen Information der Insulinproben und deren Insulingehalt hergestellt. Mit Hilfe dieses Zusammenhangs kann später aus dem Spektrum einer unbekannten Probe der Insulingehalt dieser Probe berechnet werden. Figur 2 zeigt die Korrelation zwischen den mit HPLC gemessenen und den aus den NIR-Transmissionsspektren ermittelten Werten für den Insulin-Gesamtgehalt der Basal^{®}-Insulin-Kalibrierproben (jeweils in % des Sollgehaltes). Es wird deutlich, dass zwischen den aus den NIR-Spektren ermittelten Werten und den mittels HPLC ermittelten Werten eine gute Korrelation besteht.

Anschließend wurden Prozessproben aus dem Insulin-Produktionsprozess untersucht. Es handelte sich dabei um Proben, die im routinemäßigen Herstellprozess erhalten und als nicht gebrauchsfähig verworfen wurden. Aus den erhaltenen NIR-Spektren wurde mit Hilfe der multivariaten Regressionsgleichung der Insulingehalt ermittelt. Dieselben Ampullen wurden anschließend mittels HPLC untersucht.

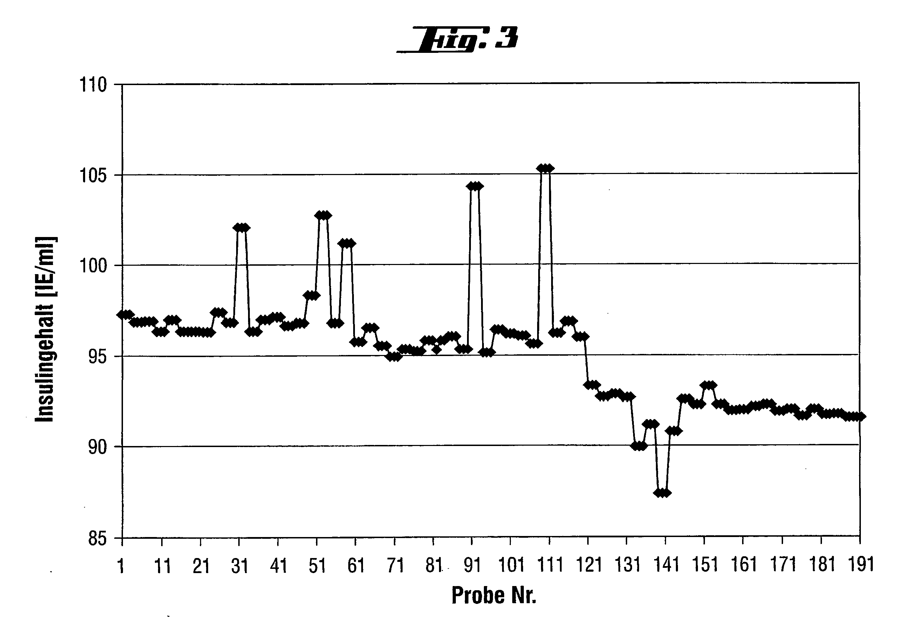

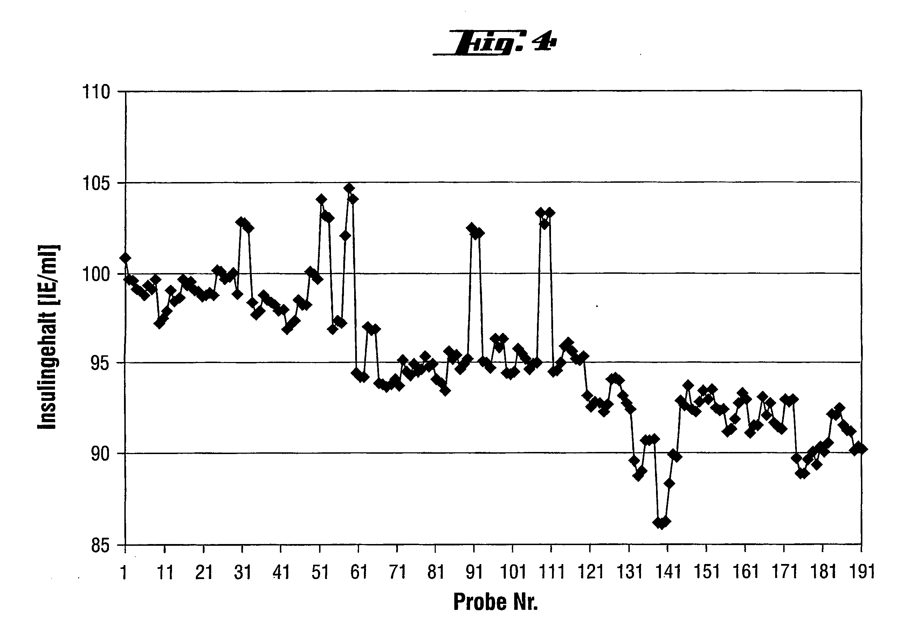

Figur 3 zeigt den mit HPLC bestimmten Insulin-Gesamtgehalt, Figur 4 den aus den NIR-Spektren mit dem in der Beschreibung beschriebenen Auswerteverfahrens bestimmten Insulin-Gesamtgehalt der untersuchten Proben (jeweils in IE).

Die aus den NIR-Transmissionsspektren und mit HPLC ermittelten Werte zeigen eine gute Übereinstimmung. Es wird deutlich, dass die mittels HPLC ermittelten Ausreißer mit Hilfe der geglätteten und normierten NIR-Transmissionsspektren eindeutig detektiert werden können.

### Beispiel 2

Ziel einer Überwachung der Insulinabfüllung ist eine quantitative Kontrolle des Insulingehaltes von 100 % der abgefüllten Insulinampullen. Der Insulingehalt der abgefüllten Insulinsuspensionen soll dabei nur um maximal +/- 5 % vom deklarierten Wert abweichen. Ausreißer sollen einwandfrei detektiert werden. Die Überwachung soll entweder während der Abfüllung an bewegten Insulinkartuschen erfolgen oder nach der Abfüllung an bereits abgefüllten Kartuschen. In beiden Fällen erfolgt die Messung durch das Primärpackmittel (Glaskartusche) und im bewegten Messgut.

Zur Simulation der Geschwindigkeiten, die bei einer Abfüllung von Insulin kartuschen vorliegen, wurde eine optische Kontrollmaschine der Firma EISAI Machinery des Typs 288 verwendet. Diese Maschine kann mit Insulinkartuschen (Suspensionen) bestückt werden und bringt die Kartuschen in Rotation, sodass mit Hilfe der in der Kartusche enthaltenen Metallkugeln eine homogene Suspension entsteht. In diese Maschine wurde die NIR-Messaparatur eingebaut, die vergleichbar zu Figur 1 aufgebaut ist. Die Messung erfolgte in der bewegten, in Rotation befindlichen Kartusche bei einer Leistung von 150 Kartuschen pro Minute. Dabei ist darauf zu achten, dass zum Zeitpunkt der Messung eine homogene Suspension vorliegt. Die eingebaute Messapparatur besteht aus einer 50 Watt Halogenlampe (Comar 12LL50), einer Halterung für die Lampe mit integrierter Sammellinse (z.B. Comar 20LH00), die den Brennpunkt der Strahlung auf den Mittelpunkt der Insulinkartusche fokussiert, einer zweiten Sammellinse (z.B. Comar 80TC50), die die transmittierte Strahlung kollimiert und über eine Einkopplung (z.B. Zeiss, Nr. 772571-9020-000) und einen Lichtleiter (z.B. Zeiss, CZ-# 1050-724) einem Photodiodenarray-Detektor (Zeiss, MMS NIR Nr. 301261) zuleitet. Die analogen Signale am Detektor werden digitalisiert und in eine Textdatei ausgelesen. Insgesamt wird die Strahlung an 128 Photodioden über einen Bereich von ca. 900 bis 1670 nm gemessen. Der Zeitpunkt der Messung wurde über eine Lichtschranke (Wenglor UM55PA2 & 083-101-202) getriggert, die bei der Passage der Kartusche durch den Strahlengang die Aufnahme eines Spektrums gesteuert hat. Der PDA-Detektor wurde am Tag jeder Messung zunächst gegen Spektralon abgeglichen.

Mit der beschriebenen Apparatur wurden Insulinzubereitungen (Suspensionen) des Typs Insuman Basal, Insuman Comb 25 und Insuman Comb 50 vermessen. Die Dauer der Spektrenaufnahme betrug 8 Millisekunden [ms].

Die Auswertung der Insulinspektren erfolgte mit dem in der Beschreibung beschriebenen Verfahren gegen Modellspektren. Die Modellspektren und ihre Variabilität wurden durch das Vermessen von acht mit Wasser gefüllten Kartuschen erhalten. Die Modell- und Insulinspektren wurden geglättet und autoskaliert. Anschließend wurde unter Verwendung von wellenlängenspezifischen Gewichtungsfaktoren die euklidische Distanz jedes Insulinspektrums vom mittleren Modellspektrum berechnet.

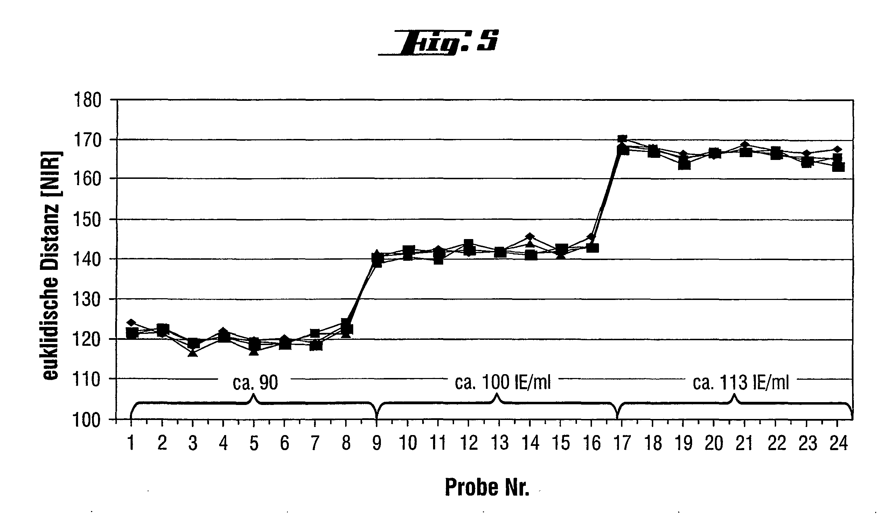

Für jeden Zubereitungstyp Insuman Basal, Insuman Comb 25 und Insuman Comb 50 wurden Muster unterschiedlicher Konzentration hergestellt und die euklidischen Distanzen zum Modellspektrum berechnet. Die Abhängigkeit des Insulingehaltes von der euklidischen Distanz ist beispielhaft für die unterschiedlichen Zubereitungstypen in Figur 5 für Insuman Comb 25 dargestellt. Die Präzision des Verfahrens ist darin auch erkennbar, da 4 Wiederholmessungen dargestellt sind. Für jeden Zubereitungstyp ergibt sich eine Kalibrierfunktion (Polynom 2. Grades) mit der die euklidische Distanz in Insulingehalte umgerechnet werden kann. Nach Umrechnung der euklidischen Distanz in Insulingehalte müssen zwei Korrekturfaktoren berücksichtigt werden. Der Insulingehalt muss um die Temperatur des Messgutes korrigiert werden. Zusätzlich kann ein zubereitungsspezifischer Faktor zum Tragen kommen, der auf unterschiedliche Kristallgrößenverteilungen in der Suspension zurückzuführen ist. Dadurch kann der Gehalt entweder prozentual in Bezug auf die ersten 20 Ergebnisse bezogen werden. Man erhält dann einen Gehalt in Prozent des Sollwertes, bezogen auf die ersten Kartuschen einer Abfüllung. Der ermittelte Insulingehalt kann andererseits auch um einen Faktor korrigiert werden, der sich aus dem Verhältnis des unkorrigierten Wertes einer Probe zum parallel gemessenen Insulingehalt ergibt. In

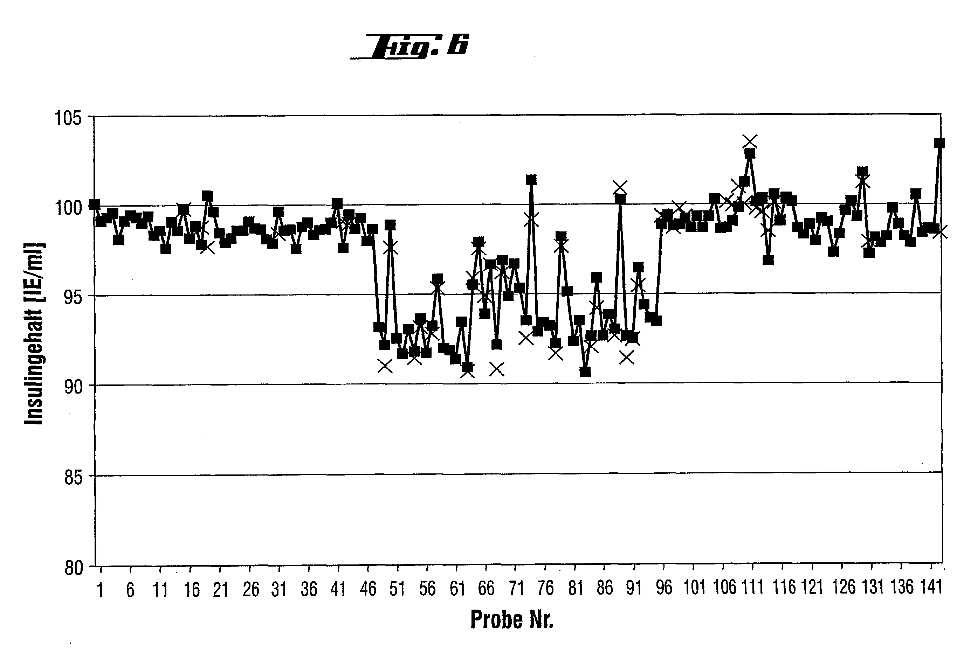

Figur 6 ist dieser Korrekturfaktor mit Probe 16 ermittelt worden und beispielhaft für andere Zubereitungstypen für Insuman Comb 25 eine Serie von Kartuschen unbekannten Gehaltes auf diese Weise ausgewertet worden. Es handelt sich dabei um Proben, die im routinemäßigen Herstellprozess erhalten und als nicht gebrauchsfähig verworfen wurden. Der Korrekturfaktor für die Temperatur wurde nicht angewendet, da es keine Unterschiede im Verlauf der Messung gab. Stichprobenartig wurden weitere Muster mittels HPLC analysiert.

Man kann erkennen, dass die Ergebnisse mit dem erfindungsgemäßen Verfahren (schwarze Vierecke gut mit den Ergebnissen über das konventionelle Verfahren (HPLC, schwarze kreuze) übereinstimmen. Es kann eindeutig und präzise beurteilt werden, ob ein Wert innerhalb der Grenzen von 95 bis 105 % liegt oder außerhalb.

## Patentansprüche

1. Verfahren zum Quantifizieren der Zusammensetzung eines sich bewegenden Produkts mit den folgenden Schritten:
Bestrahlen des Produkts mit einer Strahlungsquelle im nahen Infrarotbereich;
Empfangen von Strahlung, die durch das Produkt transmittiert wird, und
Bereitstellen eines Ausgangssignals entsprechend der Intensität der empfangenen Strahlung bei einer Anzahl von unterschiedlichen Wellenlängen;
Bestimmen auf der Basis des Ausgangssignals mit einem mathematischen Verfahren, ob sich das Produkt innerhalb vorbestimmter Integritätskriterien befindet oder nicht,
**dadurch gekennzeichnet, dass**
das sich bewegende Produkt, welches eine Lösung oder Dispersion in einer Primärverpackung ist und auf Basis des Ausgangssignals der Gehalt mindestens einer In der Dispersion oder Lösung enthaltenden Substanz quantitativ bestimmt wird, wobei das Produkt eine Dispersion enthält und die mindestens eine Substanz in der dispersen und in der kontinuierlichen Phase der Dispersion vorliegt, und wobei die Dispersion kristallines und
gelöstes Insulin enthält.

2. Verfahren nach Anspruch 1, **dadurch gekennzeichnet, dass** mindestens einmal eine Kalibrierung durchgeführt wird, indem der Gehalt der mindestens einen Substanz in der Lösung oder Dispersion mittels eines alternativen Verfahrens quantitativ bestimmt wird.

3. Verfahren nach Anspruch 2, **dadurch gekennzeichnet, dass** als alternatives Verfahren HPLC eingesetzt wird.

4. Verfahren nach einem der Ansprüche 1 bis 3, **dadurch gekennzeichnet, dass** der Bestimmungsschritt Gewichtungsfaktoren verwendet.

5. Verfahren nach Anspruch 4, **dadurch gekennzeichnet, dass** das Produkt eine Dispersion enthält und im Bestimmungsschritt Gewichtungsfaktoren verwendet werden, die auf Basis einer Lösung ermittelt werden.

6. Verfahren nach Anspruch 5, **dadurch gekennzeichnet, dass** die Lösung zur Ermittlung der Gewichtungsfaktoren und die Dispersion die gleiche quantitative zu bestimmende Substanz enthalten.

7. Verfahren nach einem der Ansprüche 1 bis 6, **dadurch gekennzeichnet, dass** das sich bewegende Produkt eine Insulinampulle oder Insulinkartusche ist.

## Claims

1. A method for quantifying the composition of a moving product, with the following steps:
irradiating the product with a radiation source in the near infrared range;
receiving radiation which is transmitted through the product, and providing an output signal corresponding to the intensity of the radiation received at a number of different wavelengths;
determining whether or not the product lies within predetermined integrity criteria on the basis of the output signal using a mathematical method,
wherein
the moving product is a solution or dispersion in primary packaging, and the content of at least one substance contained in the dispersion or solution is quantitatively determined on the basis of the output signal, where the product contains a dispersion, and
the at least one substance is present in the disperse and continuous phase of the dispersion, and where the dispersion contains crystalline and dissolved insulin.

2. The method as claimed in claim 1, wherein calibration is carried out at least once by quantitatively determining the content of the at least one substance in the solution or dispersion by means of an alternative method.

3. The method as claimed in claim 2, wherein HPLC is used as the alternative method.

4. The method as claimed in one of claims 1 to 3, wherein the determination step uses weighting factors.

5. The method as claimed in claim 4, wherein the product contains a dispersion, and weighting factors which are found on the basis of a solution are used in the determination step.

6. The method as claimed in claim 5, wherein the solution for finding the weighting factors and the dispersion contain the same substance to be quantitatively determined.

7. The method as claimed in one of claims 1 to 6, wherein the moving product is an insulin vial or insulin cartridge.

## Revendications

1. Procédé de quantification de la composition d'un produit en déplacement comprenant les étapes suivantes :
l'exposition du produit à une source de rayonnements dans la plage infrarouge proche ;
la réception du rayonnement transmis au travers du produit et la préparation d'un signal de sortie correspondant à l'intensité du rayonnement reçu à un certain nombre de longueurs d'onde différentes ;
la détermination à partir du signal de sortie par un procédé mathématique de si le produit satisfait ou non des critères d'intégrité prédéterminés,
**caractérisé en ce que**
le produit en déplacement est une solution ou une dispersion dans un emballage primaire et la teneur en au moins une substance contenue dans la dispersion ou la solution est déterminée quantitativement à partir du signal de sortie, le produit contenant une dispersion et la ou les substances se trouvant dans la phase dispersée et
dans la phase continue de la dispersion, et la dispersion contenant de l'insuline cristalline et dissoute.

2. Procédé selon la revendication 1, **caractérisé en ce qu'**un étalonnage est réalisé au moins à une reprise par détermination quantitative de la teneur en la ou les substances dans la solution ou la dispersion par un autre procédé.

3. Procédé selon la revendication 2, **caractérisé en ce que** l'HPLC est utilisée en tant qu'autre procédé.

4. Procédé selon l'une quelconque des revendications 1 à 3, **caractérisé en ce que** l'étape de détermination utilise des facteurs de pondération.

5. Procédé selon la revendication 4, **caractérisé en ce que** le produit contient une dispersion et des facteurs de pondération calculés à partir d'une solution sont utilisés à l'étape de détermination.

6. Procédé selon la revendication 5, **caractérisé en ce que** la solution pour le calcul des facteurs de pondération et la dispersion contiennent la même substance à déterminer quantitativement.

7. Procédé selon l'une quelconque des revendications 1 à 6, **caractérisé en ce que** le produit en déplacement est une ampoule d'insuline ou une cartouche d'insuline.
